**Europäisches Patentamt**

**European Patent Office**

**Office européen des brevets**

(19)

(11) Publication number: **0 027 475**
**A1**

(12) # EUROPEAN PATENT APPLICATION

(21) Application number: **79104033.0**

(22) Date of filing: **18.10.79**

(51) Int. Cl.³: **F 16 K 1/36**
**C 08 J 7/00**

(43) Date of publication of application:
**29.04.81 Bulletin 81/17**

(84) Designated Contracting States:
**AT BE CH DE FR GB IT LU NL SE**

(71) Applicant: **UNASCO Pty. Limited**
**1 Amax Avenue**
**Girraween New South Wales, 2145(AU)**

(72) Inventor: **Bentley, Herbert William**
**1 Amax Avenue**
**Girraween, New South Wales 2145(AU)**

(74) Representative: **Baillie, Iain Cameron et al,**
**c/o Ladas, Parry, von Gehr. Goldsmith & Deschamps**
**Blumenstrasse 48**
**D-8000 München 2(DE)**

(54) Improved tap washers.

(57) A valve washer comprising an elastomeric core with one surface thereof bonded to a layer of polyolefin.

EP 0 027 475 A1

Croydon Printing Company Ltd.

"IMPROVED TAP WASHERS"

The present invention relates to an improved valve washer and in particular to an improved tap washer.

In one broad form the invention comprises a material suitable as a valve washer comprising an elastomeric core with one surface thereof bonded to a layer of polyolefin.

In a preferred form of the invention the polyolefin is bonded to both sides of the elastomeric core.

High density polyethylene is suitable for the present invention. However, ultra high molecular weight polyethylene was found to be the preferred polymeric material especially when the core is vulcanised rubber.

The properties of one ultra high molecular weight polyethylene having the Registered Trademark "TUFFCLAD" is as follows:-

| Material | Static | Kinetic | | Test Method |
|---|---|---|---|---|
| Mild Steel vs. Mild Steel | .30-.40 | .25-.35 | ) | ASTM |
| Mild Steel vs. TUFFCLAD | .15-.20 | .12-.20 | ) | D 1894 |
| TUFFCLAD vs. TUFFCLAD | .20-.30 | .20-.30 | ) | |

Comparison of Dynamic Coefficient of Friction on Polished Steel

| Property | TUFFCLAD (POLYOLEFIN) | Nylon 6/6 | Nylon 6 | Teflon | Delrin | Nylatron GS |
|---|---|---|---|---|---|---|
| Dry | .10-.22 | .15-.40 | .15-.40 | .04-.25 | .15-.35 | .12-.20 |
| Water | .05-.10 | .14-.19 | .14-.19 | .04-.08 | .10-.20 | .10-.12 |
| Oil | .05-.08 | .02-.11 | .02-.11 | .04-.05 | .05-.10 | .08-.10 |

- 2 -

Sand Slurry Abrasion Tests were carried out under the following conditions: Slurry: 2 parts water, 3 parts sand (0.3 to 1.0mm, 0.008" to 0.04"); Test specimen: 1" x 3" x ¼"; Rotational speed of test specimen : 1200 rpm.; Test period: 24 hours; Temperature of apparatus increases to 120$^O$F. The following table gives an indication of the abrasion resistance of TUFFCLAD. A value of 100 was designated for the amount of volumetric abrasion loss to the TUFFCLAD specimen. The values shown for other materials are those of volumetric loss compared to TUFFCLAD. The higher the figure, the more abrasion loss.

| Material | Specific Gravity (g/cm$^3$) | Relative Volumetric Abrasion |
|---|---|---|
| Acetal copolymer | 1.42 | 700 |
| Beechwood | 0.83 | 2700 |
| Carbon Steel | 7.45 | 160 |
| Epoxy resin | 1.53 | 3400 |
| TUFFCLAD (POLYOLEFIN) | 0.94 | 100 |
| Low density polyethylene | 0.92 | 600 |
| Phenolic resin | 1.40 | 2500 |
| Plexiglas | 1.31 | 1800 |
| Polypropylene | 0.90 | 660 |
| Polyvinyl chloride (PVC) | 1.33 | 920 |
| TFE | 2.26 | 530 |
| TFE (25% Glass Fiber) | 2.55 | 570 |

-4-

As "Tuffclad" has self-lubricating and high-slip properties its suitability for bonding to elastomeric materials was unsuspected. However, during experimentation it was surprisingly found that a layer of "Tuffclad" was bonded onto a sheet of rubber during the normal vulcanising step and forming a strong bond between the rubber and the "Tuffclad". The resulting bond is such that during reported deformation tests there appeared to be no separation between the "Tuffclad" and the rubber.

In a typical vulcanising process the uncured core is placed between two sheets of the high density polyethylene and the thus layered uncured sheet placed in an autoclave to cure for 6-8 hours at a temperature of about 500°F.

Thus the present invention provides a washer having a non-hydroscopic wear face with the resiliency of an elastomeric material.

**0027475**

## CLAIMS

### "AN IMPROVED VALVE WASHER"

1.   A valve washer comprising an elastomeric core with one surface thereof bonded to a layer of polyolefin.

2.   The washer of claim 1 configured as a tap washer of generally disc shape and having its major sealing surfaces bonded with a layer of polyolefin.

3.   The washer of claim 1 wherein the polyolefin is polyethylene.

4.   The washer of claim 2 or 3 wherein the core is vulcanised rubber.

5.   A tap washer substantially as hereinbefore described with reference to the Examples.

0027475

European Patent Office

**EUROPEAN SEARCH REPORT**

Application number

EP 79104033.0

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | <u>AT - B - 299 535</u> (S.A. PNEUMATI-QUES) <br><br> + Totality + <br><br> -- | 1-5 | F 16 K 1/36 <br><br> C 08 J 7/00 |
| X | <u>FR - A - 1 567 289</u> (S.A. PNEUMA-TIQUES) <br><br> + Totality + <br><br> -- | 1-5 | |
| | <u>FR - A - 1 130 976</u> (BOURNER) <br> + Page 2, lines 32-47; fig. 3, 4 + <br> -- | 4,5 | **TECHNICAL FIELDS SEARCHED (Int.Cl. ³)** |
| | <u>DE - A - 1 620 832</u> (PNEUMATIQUES) <br> + Totality + <br><br> -- | 3-5 | F 16 K 1/00 <br><br> C 08 J 7/00 |
| | <u>US - A - 2 947 325</u> (MC FARLAND) <br> + Totality + <br><br> ---- | 3-5 | F 16 J 15/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> VIENNA | Date of completion of the search <br> 09-05-1980 | Examiner <br> PALLA | |

EPO Form 1503.1   06.78